# EUROPÄISCHE PATENTSCHRIFT

(11) **EP 1 979 396 B1**
(45) Veröffentlichungstag und Bekanntmachung des Hinweises auf die Patenterteilung: **16.11.2011**
(21) Anmeldenummer: 06707925.1
(22) Anmeldetag: 31.01.2006
(51) Int. Cl.: C08G 69/26, C08G 69/36, C08L 77/00, C08L 77/06

(54) **POLYAMIDFORMMASSE UND DEREN VERWENDUNG ZUR HERSTELLUNG VON TRANSPARENTEN,HEISSDAMPFSTERILISIERBAREN FORMTEILEN UND EXTRUDATEN**
POLYAMIDE MOLDING MATERIAL AND ITS USE FOR PRODUCING TRANSPARENT, STEAM-STERILIZABLE MOLDINGS AND EXTRUDATES
MATIERE POUR MOULAGE A BASE DE POLYAMIDE ET SON UTILISATION POUR LA FABRICATION D'EXTRUDATS ET D'ELEMENTS MOULES TRANSPARENTS STERILISABLES PAR DE LA VAPEUR SURCHAUFFEE

(43) Veröffentlichungstag der Anmeldung: 15.10.2008
(73) Patentinhaber: EMS-CHEMIE AG, 7013 Domat/Ems (CH)
(72) Erfinder: BÜHLER, Friedrich Severin, 7430 Thusis (CH); HALA, Ralph, 88161 Lindenberg (DE)
(74) Vertreter: OK pat AG
(86) Internationale Anmeldenummer: PCT/EP2006/050556
(87) Internationale Veröffentlichungsnummer: WO 2007/087896

(56) Entgegenhaltungen:
- EP-A1- 0 885 930
- EP-B1- 0 725 100
- DE-A1- 2 642 244

## Beschreibung

Copolyamidformmasse zum Herstellen von transparenten, heissdampf-sterilisierbaren Formteilen und Extrudaten gemäss dem Oberbegriff des unabhängigen Anspruchs 1, sowie die Verwendung dieser Copolyamidformmasse zum Herstellen solcher transparenter, heissdampfsterilisierbarer Formteile und Extrudate gemäss dem Oberbegriff des unabhängigen Anspruchs 5.

Die Sterilisierung von Gegenständen kann in kochendem Wasser (also bei ca. 100 °C) oder bei erhöhten Temperaturen in gesättigtem Wasserdampf (Dampfsterilisation) oder trockener Gasatmosphäre (Heissluftsterilisation) erfolgen. Die Heissdampfsterilisation ist das sicherste Verfahren im Krankenhaus und in der Praxis. Sie ist gegenüber allen anderen Sterilisationsmethoden zu bevorzugen. Bei einer Sterilisationstemperatur von 121 °C ist eine Einwirkzeit von mindestens 15 Minuten, bei 134 °C von mindestens 3 Minuten einzuhalten. Abweichungen hiervon bedürfen der vorherigen Validierung. Die Validierungsanforderungen sind in der ÖNORM EN 554 festgelegt. Gegenüber der Heissdampfsterilisation birgt die Heissluftsterilisation eine Reihe von Unsicherheiten: Bei trockener Hitze erfolgt die Wärmeübertragung auf das Sterilisiergut relativ langsam und durch die Bildung von Kälteinseln kann der Sterilisationserfolg beeinträchtigt werden; eine Verfahrensvalidierung für die Heissluftsterilisation ist deshalb nicht möglich (vgl. Internetseite www.infektionsnetz.at).

Transparente, heissdampf-sterilisierbare Kunststoffe sollten eine Glasübergangstemperatur (Tg-Wert) von mindestens 180 °C aufweisen, damit sie bei der bevorzugten Heissdampfsterilisation bei 134 °C keine mechanischen oder optischen Qualitätseinbussen oder Formveränderungen erleiden. An Stelle der Sterilisationsdauer von 3 Minuten, wurde im Zusammenhang mit der vorliegenden Erfindung die Dauer der Heissdampfsterilisation bei 134 °C auf 7 Minuten erhöht, um einen Sicherheitsfaktor von mindestens 2 einzuhalten. Zudem sollen die Produkte mindestens 100 Heissdampf-Sterilisationszyklen, bevorzugt mindestens 130 Heissdampf-Sterilisationszyklen überstehen, ohne dass sie sichtbare Veränderungen oder Abweichungen in ihren Dimensionen erleiden.

Diesem internen Test-Standard werden bekannte, transparente Produkte, wie TROGAMID^{®} CX (PA PACM12) und TROGAMID^{®} T5000 (PA 6-3-T) von Degussa nicht gerecht, weil sie einen Tg-Wert von 140 °C. bzw. 153 °C aufweisen. Dabei steht PACM für Bis-(4-amino-cyclohexyl)methan. Die im europäischen Patent EP 0 725 101 B2 offenbarten transparenten, farblosen und amorphen Homopolyamide weisen einen Tg-Wert von ca. 157 °C auf und sind als GRILAMID^{®} TR 90 (PA MACM12) bekannt. Dabei steht MACM für Bis-(4-amino-3-methyl-cyclohexyl)methan. Aus der deutschen Patentschrift DE 36 00 015 C2 sind transparente Copolyamide mit Bis-(4-amino-3,5-diethyl-cyclohexyl)methan als Diamin und deren Verwendung zur Herstellung von Formkörpern bekannt, die bei einem bevorzugten Tg-Wert von 140-170 °C eine ausgezeichnete Transparenz und Hydrolysebeständigkeit in kochendem Wasser besitzen. Alle diese Materialien eignen sich jedoch nicht zum Herstellen von heissdampf-sterilisierbaren Formteilen und Extrudaten, die mehr als 100 Heissdampf-Sterilisationszyklen bei 134 °C und während 7 Minuten schadlos überstehen sollen, da sie unter diesen Bedingungen Deformationen erleiden bzw. Risse zeigen.

Aromatische Dicarbonsäuren, wie Isophthalsäure (IPS oder I) oder Mischungen derselben mit bis zu 50 Gew.-% Terephthalsäure (TPS oder T) bilden beispielsweise mit MACM amorphe, hochtransparente Polyamide mit einem Tg-Wert von über 240 °C. Produkte aus diesem Material sind in üblichen Polymerisationskessein nicht herstellbar und schlecht verarbeitbar.

Aliphatische und cycloaliphatische Polyamide mit aliphatischen Dicarbonsäuren mit 4 bis 36 C Atomen, wie beispielsweise MACM12 (siehe Vergleichsbeispiel 4), MACM36, PACM12 (siehe Vergleichsbeispiel 5) bzw. PACM36, oder Mischungen davon halten diesen Test-Sterilisationsbedingungen (134 °C / 7 Minuten) nicht stand; sie verformen sich oder werden trübe. Dasselbe gilt für Polyamide aus aromatischen Dicarbonsäuren und aliphatischen Diaminen mit 4 bis 36 C Atomen, wie beispielsweise PA 6I, PA 12I bzw. PA 6I/6T oder Mischungen davon.

Sterilisierbare Copolyamide sind aus dem Stand der Technik bekannt. So offenbart z.B. EP 0 055 335 B1 ein transparentes und kochwasserbeständiges Polyamid, welches bei 122 °C während 24 Stunden sterilisierbar ist, ohne dass eine Eintrübung oder eine Deformation der Formteile feststellbar wäre. Auch das Dokument EP 0 050 742 B1 offenbart transparente, kochwasser- und sterilisationsbeständige Polyamide. Diese Polyamide weisen einen Tg-Wert von 166 °C (PACMI/PACM12 mit 45/55 Mol-%) bzw. von 175 °C (PACMI/PACM12 mit 50/50 Mol-%) auf, sie sind jedoch schon wegen ihres Tg-Werts von weniger als 180 °C für die über hundertmalige Heissdampf-Sterilisation (134 °C / 7 Minuten) nicht geeignet. Dies trifft auch bei den in DE 26 42 244 A1 offenbarten, glasklar durchsichtigen Polyamiden mit Tg-Werten von 140 bis 170 °C zu, deren Stabilität lediglich in kochendem Wasser getestet wurde.

Die in EP 0 725 100 B1 beschriebenen Polyamide (MACMI/12), die vom aktuellen Anmelder unter dem Namen GRILAMID^{®} TR 70 hergestellt und vertrieben werden, weisen zwar einen Tg-Wert von 200 °C auf, überdauern unbeschadet aber nur 5 Test-Sterilisationszyklen bei 134 °C / 7 Minuten (siehe Vergleichsbeispiel 9). Ausserdem sind Polyamide mit einem so hohen Tg-Wert schwierig herstellund verarbeitbar.

Mehrfach heissdampf-sterilisierbare Teile für die Medizin- und Lebensmitteltechnik aus Polysulfon (PSU, wie z.B. ULTRASON^{®} S von BASF), Polyphenylsulfon (PPSU), Polyethersulfon (PESU, wie z.B. ULTRASON^{®} E von BASF) und Polyetherimid (PEI, wie z.B. ULTEM^{®} 1010 von General Electric) werden zwar verwendet, sind aber als sehr gelbstichig und sehr kostspielig bekannt.

Alle bisher genannten Zusammensetzungen eigenen sich entweder aus ökonomischen oder verfahrenstechnischen Gründen, wegen deren zu geringen oder zu hohen Tg-Werte nicht oder nur bedingt als Formmassen zum Herstellen von heissdampf-sterilisierbaren, transparenten Formteilen und Extrudaten, die mindestens 100 Heissdampfsterilisationszyklen (134 °C / 7 Minuten), bevorzugt mindestens 130 Heissdampf-Sterilisationszyklen ohne sichtbare Beschädigung und ohne mechanische Schädigung überstehen können. Der bekannte Stand der Technik offenbart keine Daten über die Eignung von Produkten in Bezug auf deren vielfach wiederholte Sterilisierfähigkeit, die heute aus Sicherheits- und Zeitgründen überwiegend bei 134 °C durchgeführt wird. Sterilisiertemperaturen von 122 °C, wie sie in EP 0 055 335 B1 und EP 0 050 742 B1 angewendet wurden, stellen deutlich weniger drastische Bedingungen dar und erlauben niedrigere Tg-Werte der Produkte, ohne dass z.B. Deformationen auftreten.

Die Aufgabe der vorliegenden Erfindung besteht darin, alternative Formmassen vorzuschlagen, welche zum Herstellen von heissdampf-sterilisierbaren, transparenten Formteilen und Extrudaten sowie diesen in ihrer Zusammensetzung entsprechenden, heissdampf-sterilisierbaren und transparenten Normprüfkörpern (ISO-Prüfkörpern) verwendet werden können, wobei die Normprüfkörper mindestens 100 Heissdampf-Sterilisationszyklen (134 °C / 7 Minuten), bevorzugt mindestens 130 Heissdampf-Sterilisationszyklen überstehen, ohne dass die Reissdehnung unter die Streckdehnung fällt und ohne dass sichtbare Beschädigungen oder Deformationen auftreten.

Diese Aufgabe wird gemäss einem ersten Aspekt der Erfindung durch die Merkmale des unabhängigen Anspruchs 1 erfüllt, indem eine

Copolyamidformmasse zum Herstellen von heissdampf-sterilisierbaren, transparenten Formteilen und Extrudaten vorgeschlagen wird. Die erfindungsgemässe Copolyamidformmasse ist dadurch gekennzeichnet, dass sie gebildet ist aus:
a) 38 Mol-% Bis-(4-amino-3-methyl-cyclohexyl)methan (MACM), 38 ;
b) 38 Mol-% Isophthalsäure (IPS), die bis zu 50 % durch Terephthalsäure (TPS) ersetzt sein kann; und
c) 24 Mol-% Laurinlactam (LC 12),
wobei die Relative Viskosität (RV) der Copolyamidformmasse bestimmt bei 20°C an eines 0.5% igen m-Kesollösung nach 150-Norm 307 grösser ist als 1.45.

Aus solchen Copolyamidformmassen hergestellte, den transparenten und heissdampf-sterilisierbaren Formteilen und Extrudaten in ihrer Zusammensetzung entsprechende Normprüfkörper weisen einen Reissdehnungswert auf, der nach dem Erdauern von mindestens 140 Heissdampf-Sterilisationszyklen über der Streckdehnung dieser Normprüfkörper liegt. Überraschenderweise wurden somit geelgnete Monomer-Kombinationen und ein spezieller Viskositätswert gefunden, dass diese Normprüfkörper den Test-Sterilisationsbedingungen (134 °C / 7 Minuten) über 140 Zyklen mechanisch standhalten, ohne ihre Transparenz zu verlieren, eine starke Verfärbung zu zeigen oder sich zu verziehen.

Diese Aufgabe wird gemäss einem zusiten Aspekt der Erfindung durch die Merkmale des unabhängigen Anspruchs 5 erfüllt, indem die Verwendung einer

Copolyamidformmasse zum Herstellen von heissdampf-sterilisierbaren, transparenten Formteilen und Extrudaten vorgeschlagen wird. Diese Copolyamidformmasse ist dadurch gekennzeichnet, dass sie aus:
a) 38 Mol-% Bis-(4-amino-3-methyl-cyclohexyl)methan (MACM) ;
b) 38 Mol-% Isophthalsäure (IPS), die bis zu 50 % durch Terephthalsäure (TPS) ersetzt sein kann; und
c) 24 Mol-% Laurinlactam (LC 12),
gebildet wird, wobei die Relative Viskosität (RV) der Copolyamidformmasse bestimmt bei 20°C an eines 0.5% igen m-Kesollösung nach 150-Norm 307 auf einen Wert eingestellt wird, der grösser ist als 1.45.

Gemäss dieser Verwendungen hergestellte, den transparenten und heissdampf-sterilisierbaren Förmteilen und Extrudaten in ihrer Zusammensetzung entsprechende Normprüfkörper (ISO-Zugstäbe) weisen einen Reissdehnungswert auf, der nach dem Erdauern von mindestens 140 Heissdampf-Sterilisationszyklen über der Streckdehnung liegt.

Gemäss weiterer Ausführungsformen weisen die aus diesen Copolyamidformmassen hergestellten Normprüfkörper einen Reissdehnungswert auf, der nach dem Erdauern von mindestens 250, bevorzugt von mindestens 300 und speziell bevorzugt von mindestens 350, Heissdampf-Sterilisationszyklen über der Streckdehnung liegt.

Bevorzugte Ausführungsformen und weitere erfindungsgemässe Merkmale ergeben sich jeweils aus den abhängigen Ansprüchen.

Um heissdampf-sterilisierfähige Formteile und Extrudate zu erhalten, muss die erfindungsgemässe Copolyamidformmasse folgende Eigenschaften aufweisen:

| | |
|---|---|
| Tg-Wert: | > 180 °C |
| HDT/B konditioniert: | > 140 °C |
| Relative Viskosität | > 1.45 |

Unter Extrudaten sind z.B. Profile, Rohre, Schläuche, Folien, Platten oder Hohlkörper zu verstehen.

Die Herstellung der erfindungsgemässen Copolyamidformmasse gelingt, wenn beispielsweise im System MACMI/MACMT/12 (wobei das Verhältnis IPS zu TPS zu im Bereich 1 : 1 liegt) der Anteil von Lactam 12 24 Mol-% beträgt und wenn die Relative Viskosität (gemessen bei 20 °C in 0.5 %-iger m-Kresollösung) über 1.45, bevorzugt über 1.50, besonders bevorzugt über 1.525 liegt.

Die Glasübergangstemperatur (Tg-Wert) der erfindungsgemässen Copolyamidformmassen soll mindestens 180 °C, bevorzugt mindestens 185 °C, besonders bevorzugt mindestens 195 °C betragen.

Die Herstellung der erfindungsgemässen Copolyamide für die erfindungsgemässen Copolyamidformmassen erfolgt in an sich bekannter Weise in bekannten rührbaren Druckautoklaven mit einem Vorlagegefäss und einem Reaktionsgefäss:

Im Vorlagegefäss wird deionisiertes Wasser vorgelegt und die Monomere und Additive zugegeben. Danach wird mehrfach mit Stickstoff inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäss gepumpt und dort auf die gewünschte Reaktionstemperatur von 270 bis 310 °C bei einem Druck von maximal 30 bar aufgeheizt. Der Ansatz wird in der Druckphase für 2 bis 4 Stunden auf der Reaktionstemperatur gehalten. In der anschliessenden Entspannungsphase wird der Druck innerhalb von 1 bis 2 Stunden auf atmosphärischen Druck reduziert, wobei die Temperatur leicht sinken kann.

In der folgenden Entgasungsphase wird der Ansatz bei atmosphärischen Druck für 0.5 bis 1 Stunden auf einer Temperatur von 270 bis 340 °C gehalten.

Die Polymerschmelze wird in Strangform ausgetragen, im Wasserbad bei 15 bis 80 °C abgekühlt und granuliert. Das Granulat wird für 12 Stunden bei 80 bis 120 °C unter Stickstoff auf einen Wassergehalt von unter 0.06 Gew.-% getrocknet.

Die Relative Viskosität der erfindungsgemässen Copolyamide für die erfindungsgemässen Copolyamidformmassen kann, wie dem Fachmann bekannt, durch chemische und/oder verfahrenstechnische Massnahmen eingestellt werden. Als chemische Massnahme ist die Verwendung eines Kettenreglers möglich, wobei gilt: Wird die Menge des Kettenreglers erhöht, so sinkt die Relative Viskosität. Geeignete Kettenregler sind Monocarbonsäuren, wie Benzoesäure, Essigsäure, Propionsäure oder Monoamine, wie Stearylamin. Auch Dicarbonsäuren oder Diamine oder Kettenregler mit Amin- oder Carbonsäuregruppen, die Stabilisatorgruppen des Typs HALS oder des Typs tertiär-Butyl-Phenol enthalten, wie beispielsweise Triacetondiamin oder Isophthalsäure-Di-Triacetondiamin-Derivate, sind bekannt. Kettenregler mit einer Stabilisatorgruppe führen zu einer verbesserten Licht-/UV- bzw. Hitzestabilität des Copolyamids. Bevorzugte Kettenregler für die erfindungsgemässen Copolyamide sind Benzoesäure, Essigsäure oder Triacetondiamin. Solche werden in Konzentrationen von 20 bis 100 Mol pro Tonne Endprodukt, bevorzugt 30 bis 80 Mol pro Tonne Endprodukt, noch mehr bevorzugt 40 bis 50 Mol pro Tonne Endprodukt eingesetzt.

Verfahrenstechnische Massnahmen beinhalten z.B. die Änderung der Dauer der Druckphase, der Dauer der Entgasungsphase, des Abstelldrehmoments oder des Temperaturprofils.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate, die gleichzeitig zur Reduktion der Verfärbung während der Verarbeitung führen. Die Katalysatoren werden im Bereich von 0.01 bis 0.5 Gew.-%, bevorzugt 0.03 bis 0.1 Gew.-% zugegeben.

Geeignete Entschäumer zur Vermeidung der Schaumbildung während der Entgasung sind wässrige, 10 %-ige Emulsionen, die Silicone oder Siliconderivate enthalten und in Mengen von 0.01 bis 1.0 Gew.-%, bevorzugt 0.01 bis 0.10 Gew.-% eingesetzt werden.

"Transparente Polyamide" umfassen im Zusammenhang mit der vorliegenden Erfindung zusätzlich zu den amorphen Polyamiden auch solche Polyamide, die nicht mehr völlig amorph sind, sondern auf Grund ihrer von Auge nicht sichtbaren mikrokristallinen Struktur trotzdem noch durchsichtig sind. Amorphe oder mikrokristalline Polyamide enthalten überwiegend cycloaliphatische Diamine, aromatische Dicarbonsäuren und/oder aliphatische Dicarbonsäuren. Cycloaliphatische Diamine sind, z.B. MACM (z.B. LAROMIN^{®} der BASF), PACM (z.B. Dicykan der BASF) und Cyclohexyldiamin. Aromatische Dicarbonsäuren sind, z.B. Isophthalsäure, Terephthalsäure und Naphthalindicarbonsäuren.

Im Zusammenhang mit der vorliegenden Erfindung bezeichnet der Begriff "Transparente Polyamide" (Co)Polyamide bzw. (Co)Polyamidformmassen, deren Lichttransmission mindestens 70 % beträgt, wenn das Polyamid in Form einer Platte, z. B. einer Rundplatte, mit einer Dicke von 2 mm vorliegt. Rundplatten von 70 × 2 mm werden auf einer Arburg Spritzgussmaschine im polierten Werkzeug hergestellt, wobei die Zylindertemperatur zwischen 240 und 340 °C und die Werkzeugtemperatur zwischen 20 und 140 °C liegt. Die Messung der Lichttransmission wird standardmässig auf einem UV/VIS-Spektrometer der Firma Perkin-Elmer im Bereich von 200 bis 800 nm an solchen Rundplatten der Dimension 70 × 2 mm ausgeführt. Der Transmissionswert wird jeweils für eine Wellenlänge von 560 nm angegeben.

Der Yellow Index ist eine wichtige Qualitätsgrösse für transparente, ungefärbte Teile. Ein etwaiger Gelbstich der Polyamidformmasse kann durch Hinzufügen von Blaupigment vor oder bei der Weiterverarbeitung derselben kompensiert werden.

Im Zusammenhang mit der vorliegenden Erfindung werden unter dem Begriff "Polyamid" verstanden:
- Homopolyamide;
- Copolyamide;
   und unter dem Begriff "Polyamidblends":
- Mischungen (Blends) aus Homopolyamiden und Copolyamiden;
- Mischungen aus Homopolyamiden; und
- Mischungen aus Copolyamiden;
und unter dem Begriff "Polyamidformmasse" eine Formmasse, die Polyamide und/oder Polyamidblends enthält, wobei diese Polyamidformmasse Zusatzstoffe enthalten kann.

Das im Zusammenhang mit der vorliegenden Erfindung angewendete Test-Sterilisierverfahren (134 °C / 7 Minuten) wurde wie folgt durchgeführt:

### 1. Ausrüstung zur Heissdampf-Sterilisation

Eingesetzt wird ein Druckautoklav der Firma Tuttnauer vom Typ 2549 E mit einem Kammervolumen von 26 I. Im runden Innenraum der waagrecht angeordneten Druckkammer befinden sich Tablare mit Lochblechen zur Aufnahme der Proben in vier Ebenen.

### 2. Normprüfkörper und Vorbehandlung

ISO-Prüfkörper (Norm: ISO/CD 3167, Typ A1, 170 × 20/10 × 4 mm) werden ohne Vorbehandlung wie gespritzt auf die Tablare gelegt, ohne dass sie sich berühren. Danach wird der Autoklav geschlossen und verschraubt. Je nach den geplanten Entnahmezeiten wird die Menge der benötigten Prüfkörper festgelegt.

### 3. Durchführung der Heissdampf-Sterilisation

Der Autoklav wird auf 134 °C aufgeheizt und das vorher zudosierte Wasser (ca. 350 ml) im Autoklaven verdampft. Dieser Vorgang dauert 20 bis 30 Minuten bei einem bis auf 2 bar ansteigenden Dampfdruck. Nach 5 × 7 Minuten (entsprechend 5 gezählten Zyklen in Folge) wird auf Raumtemperatur abgekühlt. Danach startet der nächste Fünferblock. Entsprechend der geplanten Entnahmezeiten werden je drei Prüfkörper entnommen.

### 4. Zugprüfung an den behandelten Prüfkörpern

Die Zugprüfung nach ISO 527 wird an drei ohne weitere Behandlung auf Raumtemperatur abgekühlten Prüfkörpern durchgeführt. Dabei wird bis 2 % Dehnung eine Zuggeschwindigkeit von 5 mm/min und oberhalb von 2 % Dehnung eine Zuggeschwindigkeit von 50 mm/min verwendet. Die mechanischen Werte stellen Mittelwerte aus drei Einzelwerten dar.

### 5. Auswerten der Heissdampf-Sterilisierbarkeit als Anzahl Zyklen

Ein Prüfkörper gilt in Bezug auf die Mechanik als heissdampf-sterilisierbar, solange die nach X Heissdampf-Sterilisationszyklen verbleibende Reissdehnung die Dehnüng an der Streckgrenze überschreitet. Als zweites Kriterium wird die Transparenz festgelegt. Die Heissdampf-Sterilisierbarkeit in Bezug auf die Transparenz ist gegeben, wenn keinerlei Risse, keine bei Betrachtung mit freiem Auge zu erkennende Verfärbung und eine Lichttransmission von mindestens 70 % (gemäss der bei der vorliegenden Erfindung verwendeten Definition) vorhanden sind.

Die Herstellung der in den Beispielen und Vergleichsbeispielen verwendeten Copolyamide erfolgt in einem Druckautoklaven, dessen Reaktionsgefäss ein Volumen von 300 I besitzt.

Als Bis-(4-amino-3-methyl-cyclohexyl)methan (MACM) können Monomere mit einem Schmelzpunkt im Bereich von - 10 °C bis + 5 °C, bevorzugt - 7 °C bis - 1 °C eingesetzt werden.

Als Bis-(4-amino-cyclohexyl)methan (PACM) können Monomere mit einem Schmelzpunkt im Bereich von 25 °C bis 45 °C, bevorzugt 33.5 bis 44 °C eingesetzt werden.

In allen Ansätzen werden verfahrensbedingte Zusätze, wie etwa 25 bis 30 Gew.-% deionisiertes Wasser für eine klare und homogene Lösung, Antischaummittel zur Unterdrückung der Schaumbildung, Katalysator zur Beschleunigung der Polykondensation und Diaminüberschuss zum Ausgleich von Diaminverlusten, zugesetzt.

In der Tabelle 1 werden die in den Beispielen und Vergleichsbeispielen verwendeten Monomere charakterisiert.

**Tabelle 1**

| **Monomer** | **Handelsprodukt** | **Schmelzpunkt [°C]** | **Sublimationstemperatur [°C]** | **Hersteller** |
|---|---|---|---|---|
| MACM | Laromin C260 | - 7 bis - 1 | - | BASF AG |
| PACM | Dicycan | 33.5 bis 44 | - | BASF AG |
| IPS | Purified Isophthalic Acid (PIA) | 345 bis 348 | 100 bei 0.07 mm Hg | BP Amoco Chemicals |
| TPS | Amoco TA-33 | 427 | 402 | BP Amoco Chemicals |
| Lactam 12 | Laurinlactam | 153 | - | EMS-CHEMIE AG |

In der Tabelle 2 werden die mit Vergleichs-kompositionen und mit der erfindungsgemässen Komposition 3 erreichten Resultate vorgestellt:

**Tabelle 2**

| **Beispiele** | | **Nummer** | | |
|---|---|---|---|---|
| Komponenten | Einheit | **1** | **2** | **3** |
| MACM | Mol-% | 19 | 38 | 38 |
| PACM | Mol-% | 22 | - | - |
| IPS | Mol-% | 41 | 38 | 19 |
| TPS | Mol-% | - | - | 19 |
| DDS | Mol-% | - | - | - |
| Lactam 12 | Mol-% | 18 | 24 | 24 |
| Tests | Einheit | **1** | **2** | **3** |
| Transmission | % | 91.5 | 93.5 | 92.5 |
| Yellow Index | - | 5 | 1 | 1 |
| Tq, trocken | °C | 200 | 188 | 190 |
| RV | - | 1.51 | 1.49 | 1.49 |
| HDT B, trocken | °C | 185 | 175 | 175 |
| HDT B, konditioniert | °C | 175 | 155 | 155 |
| Mechanisch bestandene Sterilisationszyklen | Anzahl | 200 | 150 | 435 |
| Optisch bestandene Sterilisationszyklen | Anzahl | 200 | 150 | 350 |

Im Folgenden wird die Herstellung einer erfindungsgemässen Copolyamidformmasse an Hand der in Beispiel Nr. 3 verwendeten Komposition erläutert:
- Im Vorlagegefäss des 300 I Druckautoklaven werden 42 kg deionisiertes Wasser vorgelegt und eine Mischung aus 17.0 kg IPS und 17.0 kg TPS eingerührt. Bei abgestelltem Rührer werden 48.2 kg MACM, 28.8 kg Lactam 12, 0.54 kg Benzoesäure zugegeben.
- Nach 10-maliger Inertisierung wird bis auf 230 °C aufgeheizt, wobei der Rührer nach Erreichen von 180 °C wieder eingeschalten wird. Die homogene Lösung wird bei 230 °C durch ein Sieb in das Reaktiongefäss gepumpt.
- Unter Rühren wird dort der Ansatz auf 295 °C aufgeheizt und 4 Stunden bei 20 bar in der Druckphase gehalten. Innerhalb von 1.5 Stunden wird auf atmosphärischen Druck entspannt und anschliessend 40 Minuten entgast.
- Die Polymerschmelze wird ausgetragen, im Wasserbad (65 °C) abgekühlt und granuliert. Das Granulat wird für 24 Stunden bei 100 °C unter Stickstoff auf einen Wassergehalt von unter 0.06 Gew.-% getrocknet.

In der Tabelle 3 werden die mit standardmässigen oder zu Vergleichszwecken hergestellten Kompositionen erreichten Resultate vorgestellt:

**Tabelle 3**

| **Vergleichsbeispiele** | | **Nummer** | | | | | | | |
|---|---|---|---|---|---|---|---|---|---|
| Komponenten | Einheit | **4** | **5** | **6** | **7** | **8** | **9** | **10** | **11** |
| MACM | Mol-% | 50 | - | 23 | 21 | 20 | 40.5 | 38 | 38 |
| PACM | Mol-% | - | 50 | 27 | 24 | 23 | - | - | - |
| IPS | Mol-% | - | - | 34 | 45 | 43 | 40.5 | 38 | 19 |
| TPS | Mol-% | - | - | - | - | - | - | - | 19 |
| DDS | Mol-% | 50 | 50 | 16 | - | - | - | - | - |
| Lactam12 | Mol-% | - | - | - | 10 | 14 | 19.0 | 24 | 24 |
| Tests | Einheit | **4** | **5** | **6** | **7** | **8** | **9** | **10** | **11** |
| Transmission | % | 93.0 | 92.5 | 92.0 | 91.5 | 91.5 | 92.5 | 92.0 | 93.0 |
| Yellow Index | - | 0,5 | 0,5 | 5 | 10 | 5 | 1 | 1 | 1 |
| Tg, trocken | °C | 155 | 140 | 212 | 225 | 213 | 200 | 185 | 183 |
| RV | - | 1.73 | 1.85 | 1.52 | 1.48 | 1.48 | 1.40 | 1.38 | 1.39 |
| HDT B, trocken | °C | 135 | 122 | 190 | 210 | 198 | 185 | 165 | 170 |
| HDT B, konditioniert | °C | - | - | 185 | 200 | 188 | 155 | 145 | 150 |
| Mechanisch bestandene Sterilisationszvklen | Anzahl | 0 | 0 | 80 | 60 | 70 | 5 | 5 | 5 |
| Optisch bestandene Sterilisationszyklen | Anzahl | 0 | 0 | 80 | 50 | 60 | 5 | 5 | 5 |

Die in den Tabellen verwendeten Abkürzungen sind:

| | |
|---|---|
| DA | Diamin |
| DDS | Dodecandisäure |
| HDT | Heat Distortion Temperature |
| IPS | Isophthalsäure (I) |
| Lactam 12 | Laurinlactam (L) |
| MACM | Bis-(4-amino-3-methyl-cyclohexyl)methan |
| PACM | Bis-(4-amino-cyclohexyl)methan |
| Tg | Glasübergangstemperatur |
| TPS | Terephthalsäure (T) |
| RV | Relative Viskosität |

Die Transmission wurde mit einem UV/VIS-Spektrometer der Firma Perkin-Elmer bestimmt.

Der Yellow Index wurde nach ASTM D1925 an Rundplatten mit einer Dimension von 70 × 2 mm gemessen. Diese Rundplatten wurden auf einer Arburg Spritzgussmaschine im polierten Werkzeug hergestellt, wobei die Zylindertemperatur zwischen 240 und 340 °C und die Werkzeugtemperatur zwischen 20 und 140 °C lag.

Die Glasumwandlungstemperatur wurde mittels Differential Scanning Calorimetry (DSC) bei einer Aufheizrate von 10 °C/min nach der ISO-Norm 11357-1/-2 bestimmt.

Die Relative Viskosität (RV) wurde bei 20 °C an einer 0,5 %-igen m-Kresollösung nach der ISO-Norm 307 bestimmt.

Der HDT B - Wert wurde nach der ISO-Norm 75-1/-2 bestimmt (Belastung 0.45 MPa).

Die Vergleichsbeispiele 4 und 5 zeigen, dass Normprüfkörper aus den Standardmaterialien betreffend transparenter Polyamide, nämlich GRILAMID^{®} TR 90 (MACM12) und TROGAMID^{®} CX 7323 (PACM12), nicht unter den Bedingungen 134 °C / 7 Minuten sterilisiert werden können. Die Normprüfkörper sind bereits nach 5 Sterilisationszyklen stark verformt und unbrauchbar.

Normprüfkörper aus dem Material des Vergleichsbeispiels 6 lassen sich trotz hoher Glasübergangstemperatur (Tg-Wert) und hoher Relativer Viskosität (RV) nur 80 mal heissdampf-sterilisieren, ohne dass die Reissdehnung unter die Streckdehnung fällt.

Normprüfkörper aus den Materialien der Vergielchsbeispiele 7 und 8 lassen sich trotz hoher Glasübergangstemperatur (Tg-Wert) und hoher Relativer Viskosität (RV) nur 60 bzw. 70 mal heissdampf-sterilisieren, ohne dass die Reissdehnung unter die Streckdehnung fällt.

Im Gegensatz zu den Vergleichsbeispielen 4-11 erfüllen Normprüfkörper aus dem Material des Vergleichsbeispiels 1, mit einem gegenüber den Vergleichsbeispielen 7 und 8 höheren Lactam 12 - Gehalt, die gestellten Anforderungen.

Beim Beispiel 2 und beim Vergleichsbeispiel 10 werden Materialieri gleicher Zusammensetzung, aber mit unterschiedlicher Relativer Viskosität zur Herstellung der Normprüfkörper verwendet. Entsprechendes gilt für die Materialien des erfindungsgemässen Beispiels 3 und des Vergleichsbeispiels 11. Die Materialien der Vergleichsbeispiele weisen jeweils eine geringere Viskosität auf und überstehen jeweils nur 5 Heissdampf-Sterilisationszyklen. Die Relative Viskosität der erfindungsgemäss verwendeten Materialien soll daher mindestens 1.45, bevorzugt mindestens 1.50 betragen. Besonders bevorzugt ist eine Relative Viskosität von über 1.525.

Die Resultate der Heissdampf-Sterilisationstests in Bezug auf Normprüfkörper aus der erfindungsgemässen Komposition mit der Nummer 3 sind in Tabelle 4 dargestellt:

**Tabelle 4**

| **Nummer 3** | **Einheit** | **Anzahl Sterilisationszyklen** | | | | | | | |
|---|---|---|---|---|---|---|---|---|---|
| | | 0 | 50 | 100 | 140 | 165 | 200 | 350 | 435 |
| Reissdehnung | % | 34 | 15 | 14 | 14 | 11 | 10 | 9 | 8 |
| Streckdehnung | % | 8 | 7 | 7 | 7 | 7 | 6 | 7 | 7 |

Wie aus Tabelle 4 ersichtlich ist, liegen die Werte für die Reissdehnung nach bis zu 435 Heissdampf-Sterilisationszyklen über den Werten für die Streckdehnung. Die entsprechenden Normprüfkörper erfüllen damit klar die gestellten Anforderungen an die mechanische Stabilität, sie weisen einen Reissdehnungswert auf, der nach dem Erdauern von mindestens 140 Heissdampf-Sterilisationszyklen über der Streckdehnung liegt.

Bei einer höheren Relativen Viskosität der erfindungsgemässen Komposition ist zu erwarten, dass die Anforderungen noch nach einer deutlich höheren Anzahl von Heissdampf-Sterilisationszyklen erfüllt werden.

An Hand der Tabelle 5 soll die erfindungsgemässe Zusammensetzung im Zusammenhang mit dem Stand der Technik diskutiert werden:

**Tabelle 5**

| **Offenbarung** | Komponenten der Polyamidzusammensetzung in Mol-% | | | |
|---|---|---|---|---|
| | Lactam 12 (L) | Cycloaliphatische Diamine | Aromatische Dicarbonsäure | |
| | | | IPS (I) | TPS (T) |
| **Erfindung** | 24 | MACM 38 min. | 19 | 19 |
| EP 0 553 581 B1 | 0 ≤ L < 82 | nur 1 DA möglich 9 - 50 | max. 9 - 50 min. 0 | min. 0 max. 9 - 50 |
| EP 0.725 100 B1 | 0-20 | mindestens 1 DA 40 - 50 | max. 40 - 50 min. 20 - 25 | min. 0 max. 20 - 25 |
| EP 0 313 436 A1 | 32.5 - 74 | 13 - 33.75 | min. 0 max. 0 < IPS < 6.5 bzw. 0 < I < 16.875 | max. 13 - 33.75 min. 6.5 < TPS < 13 bzw. 16.875 < T < 33.75 |
| DE 26 42 244 | 45 - 56 | nur 1 DA möglich 22 - 27,5 | max. 22 - 27.5 min. 11 - 13.75 | min. 0 max. 11 - 13.75 |

Die Komponenten der Zusammensetzungen in der Tabelle 5 werden in Mol-% angegeben, wobei die Summe der Komponenten Lactam 12, cycloaliphatische Diamine, aromatische Dicarbonsäure 100 Mol-% ergibt. Für die Umrechnung von Gew.-% in Mol-% wird die Zusammensetzung MACMI/MACMT/12 zu Grunde gelegt.

In EP 0 553 581 B1 werden Blends aus zwei Copolyamiden beansprucht. Nur die Komponente a) aus dem ersten Anspruch ist in der Tabelle wiedergegeben, da die Komponente b) die Erfindung aufgrund des hohen Lactamgehalts nicht tangiert. TPS und IPS werden bei dieser Schrift indirekt durch die Parameter y₁ und y₂ wiedergegeben. Das Verhältnis der beiden wird nicht spezifiziert, so dass nur eine der Komponenten oder eine beliebige Mischung derselben vorliegen kann. In EP 0 553 581 B1 wird (vorzugsweise) ein den Isophthalsäureanteil überwiegender Terephthalsäureanteil gefordert. Obwohl die ausserordentlich breite Anspruchsfassung in Dokument EP 0 553 581 B1 die vorliegende Erfindung zusammensetzungsmässig zufällig teilweise umfasst, haben die Anmelder jenes Schutzrechts nicht erkannt, dass eine Polyamidformmasse bzw. Copolyamidformmasse, deren Komposition einem sehr engen ausgewählten Bereich eines Teils dieses Anspruchs 1 entspricht, sich zum Herstellen von transparenten, heissdampf-sterilisierbaren Formteilen und Extrudaten eignet, welche mindestens 140 Heissdampf-Sterilisationszyklen überstehen.

Die in EP 0 725 100 B1 beschriebenen Copolyamide zeigen zwar bezüglich der Rezeptur an den Rändern der offenbarten Bereiche geringe Überschneidungen mit den Copolyamiden der vorliegenden Erfindung, es wird in dieser Schrift aber nirgends darauf hingewiesen, dass aus einem ausgewählten kleinen Teil der dort offenbarten Copolyamide und weiteren nicht offenbarten Copolyamiden transparente, unter den Bedingungen 134 °C / 7 min mehrfach heissdampf-sterilisierbare Formteile und Extrudate herstellbar sind. Dies wurde in EP 0 725 100 B1 offensichtlich nicht erkannt.

In EP 0 313 436 A1 wird das Verhältnis y₁ ("TPS") zu y₂ ("IPS") durch die Formel y₁ / (y₁ + y₂) > 0,5 festgelegt, d.h. y₁ ist immer grösser als y₂. Zudem kann y₂ Null sein, was für y₁ nicht möglich ist. Das im Falle einer Mischung von TPS und IPS der TPS-Anteil den IPS-Anteil überwiegt wird auch in der Beschreibung auf Seite 2, Zellen 24 - 25 angegeben. Die in EP 0 313 436 A1 beschriebenen Copolyamide zeigen bezüglich Lactam- und Diamingehalt nur geringe Überschneldungen mit den Copolyamiden der vorliegenden Erfindung. Für das Verhältnis IPS zu TPS gilt bel EP 0 313 436 A1, dass TPS überwiegen muss, wohingegen bei den erfindungsgemässen Copolyamiden IPS durch 50% enthält Copolyamiden von. Bei den Copolyamiden sein EP 0 313 436 A1 von muss sein TPS zwingend vorhanden. Zudem ist hier der gezwungenermassen höhere Lactam 12 - Anteil in EP 0 313 436 A1 erwähnenswert.

Die in DE 26 42 244 offenbarten Copolyamide unterscheiden sich in der Zusammensetzung deutlich von den erfindungsgemässen Copolyamiden, wobei insbesondere der wesentlich höhere Lactam 12 - Anteil zu erwähnen ist.

Die Herstellung dieser alternativen Ausführungsformen kann in an sich bekannter Weise auf üblichen Compoundiermaschinen, wie z.B. ein- oder zweiwelligen Extrudern oder Schneckenknetern durch Compoundierung der Granulatmischung der Komponenten bei eingestellten Zylindertemperaturen von 260 °C bis 340 °C erfolgen.

Eine weitere Möglichkeit der Herstellung dieser alternativen Ausführungsformen ist das Vermischen der Granulate der Komponenten zu einem homogenen Dryblend, welches anschliessend in einer Verarbeitungsmaschine, z.B. einer Schneckenspritzgussmaschine oder einem Extruder zum gewünschten Formteil oder Extrudat bei eingestellten Zylindertemperaturen von 260 °C bis 340 °C weiterverarbeitet wird.

Es soll noch angemerkt werden, dass die. Copolyamidformmassen auch übliche Zusatzstoffe, wie z.B. Stabilisatoren (Hitze- und UV-Stabilisatoren unterschiedlicher Art), Flammschutzmittel, Verarbeitungshilfsmittel, Antistatikmittel, Farbstoffe, Füll- und Verstärkungsstoffe, insbesondere nanoskalige Füll- und Verstärkungsstoffe, wie z.B. Minerale mit einer Partikelgrösse von maximal 100 nm oder unmodifizierte oder modifizierte Phyllosilicate und weitere Zusatzstoffe enthalten können. Als Hitzestabilisatoren können beispielsweise IRANOX^{®} 1098 oder IRGANOX^{®} 1010 verwendet werden. Als UV-Stabilisatoren können beispielsweise TINUVIN^{®} 312 oder 770 bzw. NYLOSTAB^{®} SEED verwendet werden. Ein UV400 Schutz kann beispielsweise mit TINUVIN^{®} 326 oder 327 erreicht werden. Die Stabilisatoren können direkt oder als Masterbatch mit Polyamid als Trägermaterial zugegeben werden. Als optische Aufheller können beispielsweise TINOPAL^{®} DMSX oder UNIVEX^{®} OB verwendet werden. Als Gleitmittel oder Einschlussverminderer kann VERSAPOL^{®} verwendet werden. Diese Zusatzstoffe werden den Polyamidformmassen in an sich bekannter Weise zugegeben,. z.B. in der Polykondensation oder danach in einer Extrusion.

Als Verarbeitungsverfahren für die erfindungsgemässen . Copolyamidformmassen eignen sich für das Herstellen von Formkörpern, z.B. das Spritzgiessen, das Spritzprägen, das Spritzblasen oder das Spritzstreckblasen und für das Herstellen von Extrudaten jede Form der Extrusion, z.B. Extrusionsblasformen, Profilextrusion, Rohrextrusion.

Die Formkörper oder Extrudate können z.B. mittels Fräsen, Bohren, Schleifen (z.B. Linsen, korrigierend oder nicht korrigierend), Lasermarkieren, Laserschweissen und Laserschneiden bearbeitet werden.

Die erfindungsgemässen. Copolyamidformmassen können in an sich bekannter Weise eingefärbt werden. Die erfindungsgemäss hergestellten Formkörper können auch in Tauchbädern eingefärbt oder mit Tauchlack überzogen (Hardcoat) werden. Falls erforderlich können die erfindungsgemäss hergestellten Formkörper auch mit einer Antireflexschicht versehen bzw. entspiegelt werden.

Als Verarbeitungsverfahren für die erfindungsgemässen Copolyamidformmassen können für das Herstellen von Flach-, Blas- oder Giess-Folien in Form von Mono- oder Mehrschichtfolien alle an sich bekannten Verfahren verwendet werden. Diese Folien können auch weiterbehandelt werden, z.B. durch Kaschieren, Recken, Verstrecken, Bedrucken oder Färben.

Bevorzugte Anwendungen der efindungsgemässen transparenten . Copolyamidformmassen betreffen das Herstellen von heissdampf-sterilisierbaren Formteilen und Extrudaten für den medizinischen Bereich, wie z.B. medizinische Werkzeuge, Katheter, Bestecke, Apparategehäuse, Konnektoren, Hähne, Inhalatoren, Rohre, Behälter, Mundstücke, Stützschienen und flexible oder starre Leitungen in medizinischen Apparaten für z.B. Atemluft und/oder Körperflüssigkeiten.

Für den technischen Bereich sind zahlreiche Gerätebestandteile denkbar, die mit Heissdampf in Berührung kommen, wie z.B. Sprühdüsen für Wasserdampf in Kaffeemaschinen, Haushaltsgeräten, Dampfgarern und Dampfreinigern; Küchengeschirr und Deckel, insbesondere für die Verwendung in Mikrowellengeräten, Pfannendeckel, Lockenstäbe, Kämme, Trockenhauben oder Rohre, Fittinge, Apparaturen und Leitungen, z.B. für den Getränketransport, wie z.B. Bierleitungen, insbesondere in Getränkeautomaten.

Im Verpackungsbereich können erfindungsgemäss hergestellte Formteile und Extrudate z.B. für Behälter, Tuben, Flaschen, Becher, Messbecher, Boxen und Folien Anwendung finden. Die wichtigsten Industriezweige sind dafür die Lebensmittel-, die Getränke-, die Reinigungsmittel- und die Farbindustrie. Die Formteile und Extrudate sind auch für die Heissabfüllung geeignet.

Die hohe chemische Resistenz und die hohe Zähigkeit der Formteile oder Extrudate erlaubt deren Einsatz in Verbindung mit aggressiven Medien, insbesondere Flüssigkeiten und Gasen, wie beispielsweise in Verschlüssen, insbesondere Textil-Verschlüssen, die chemisch gereinigt werden. Desgleichen in Gasmasken, Filtertassen, Duchflussmessern, medizinischen Geräten, Filtergehäusen, Verscheibungen, Lampengehäusen, Displays für Mobiltelefone, Spielkonsolen, GPS-Geräten oder an anderen Elektronikgeräten oder -Bauteilen, wie Bildschirmen, Bildschirmfolien oder Verpackungen.

Weitere Anwendungen umfassen z. B. Schutzhüllen für Lichtwellenleiter, Kabelummantelungen, Lichtleiter sowie Tabletts und Geschirr für Selbstbedienungsrestaurants.

## Patentansprüche

1. Copolyamidformmasse zum Herstellen von heissdampf-sterilisierbaren, transparenten Formtellen und Extrudaten, dadurch gekennnzeichnet, dass sie gebildet ist aus:
a) 38 Mol-% Bis-(4-amino-3-methyl-cyclohexyl)methan (MACM);
b) 38 Mol-% Isophthalsäure (IPS), die zu 50 % durch Terephthalsäure (TPS) ersetzt ist; und
c) 24 Mol-% Laurfnlactam (LC 12),
wobei die Relative Viskosität (RV) der Copolyamidformmasse, bestimmt bei 20°C an einer 0,5 %-Igen in-Kresoilösung nach ISO-Norm 307, grösser ist als 1.45.

2. Copolyamidformmasse gemäss Anspruch 1, **dadurch gekennzeichnet, dass** aus dieser Copolyamidformmasse hergestellte, den transparenten Formtellen und Extrudaten in ihrer Zusammensetzung entsprechende, heissdampf-sterilisierbare und transparente Normprüfkörper einen Reissdehnungswert aufweisen, der nach dem Erdauern von mindestens 140 Heissdampf-Sterilisationszyklen über der Streckdehnung (vgl. 5.16 Tab. 4) liegt, wobei der Reissdehungswert nach ISO 527 und jeder Heissdampf-Sterilisationszyklus für 7 Minuten bei 134°C durchgeführt wird.

3. Copolyamidformmasse Anspruch 2, **dadurch gekennzeichnet, dass** die aus dieser Copolyamidformmasse hergestellten Normprüfkörper einen Reissdehnungswert aufweisen, der nach dem Erdauern von mindestens 250, bevorzugt von mindestens 300 und speziell bevorzugt von mindestens 350, Heissdampf-Sterilisationszyklen über der Streckdehnung liegt.

4. Copolyamidformmasse gemäss einem der vorhergehenden Ansprüche, **dadurch gekennzeichnet, dass** sie eine Relative Viskosität von mindestens 1.50, bevorzugt von mindestens 1.525, aufweist.

5. Verwendung einer Copolyamidformmasse zum Herstellen von heissdampf-sterilisierbaren, transparenten Formtellen und Extrudaten, **dadurch gekennzeichnet, dass** die Copolyamidformmasse aus:
a) 38 Mol-% Bis-(4-amino-3-methyl-cyclohexyl)methan (MACM);
b) 38 Mol-% Isophthalsäure (IPS), die zu 50 % durch Terephthalsäure (TPS) ersetzt ist, und
c) 24 Mol-% Laurinlactam (LC 12),
gebildet wird, wobei die Relative Viskosität (RV) der Copolyamidformmasse, bestimmt bei 20°C an einer 0,5 %-igen m-Kresollösung nach ISO-Norm 307, auf einen Wert eingestellt wird, der grösser ist als 1.45.

6. Verwendung gemäss Anspruch 5, **dadurch gekennzeichnet, dass** aus dieser Copolyamidformmasse hergestellte, den transparenten Formtelien und Extrudaten in ihrer Zusammensetzung entsprechende, heissdampf-sterilisierbare und transparente Normprüfkörper einen Reissdehnungswsert aufweisen, den nach dem Erdauern von mindestens 140 Heissdampf-Sterilisationszyklen über der Streckdehnung liegt, wobei der Reissdehungswert nach ISO 527 und jeder Heissdampf-Sterilisationszyklus für 7 Minuten bei 134°C durchgeführt wird.

7. Verwendung gemäss Anspruch 6, **dadurch gekennzeichnet, dass** die aus dieser Copolyamidformmasse hergestellten Normprüfkörper einen Reissdehnungswert aufweisen, der nach dem Erdauern von mindestens 250, bevorzugt von mindestens 300 und speziell bevorzugt von mindestens 350, Heissdampf-Sterilisationszyklen über der Streckdehnung liegt.

8. Verwendung gemäss einem der Ansprüche 5 bis 7, dadurch gekennzeichnnet, dass die Relative Viskosität (RV) der Copolyamidformmasse auf einen Wert eingestellt wird, der grösser als 1.5, bevorzugt grösser als 1.525, ist.

9. Verwendung gemäss einem der Ansprüche 5 bis 8, **dadurch gekennzeichnet, dass** die aus dieser Copolyamidformmasse hergestellten heissdampfsterilisierbaren, transparenten Formtalle und Extrudate medizinische Artikel sind.

10. Verwendung gemäss einem der Ansprüche 5 bis 8, **dadurch gekennzeichnet, dass** die aus dieser Copolyamidformmasse hergestellten heissdampfsterilisierbaren, transparenten Formtelle und Extrudate Haushaltsartikel sind.

11. Verwendung gemäss einem der Ansprüche 5 bis 8, **dadurch gekennzeichnet, dass** die aus dieser Copolyamidformmasse hergestellten heissdampfsterilisierbaren, transparenten Formtelle und Extrudate Gerätebestandteile sind, die mit Heissdampf in Berührung kommen.

12. Verwendung nach einem der Ansprüche 5 bis 8, **dadurch gekennzeichnet, dass** der Copolyamidformmasse für die Herstellung dieser heissdampf-sterilisierbaren, transparenten Formteile und Extrudate Zusatzstoffe in einer Menge beigemischt werden, welche die Transparenz nicht unter den geforderten Wert sinken lässt, wobei die Zusatzstoffe unabhängig ausgewählt sind aus einer Gruppe, welche Stabilisatoren, optische Aufheller, Farbstoffe, Gleitmittel und vorzugsweise nanoskailge Füll- und Verstärkungsstoffe umfasst.

## Claims

1. A copolyamide molding compound for producing transparent molded parts and extrudates which can be sterilized by hot steam, **characterized in that** it is formed from:
a) 38 mol-% bis-(4-amino-3-methyl-cyclohexyl) methane (MACM);
b) 38 mol-% isophthalic acid (IPS), which is replaced 50% by terephthalic acid (TPS); and
c) 24 mol-% laurin lactam (LC 12),
the relative viscosity (RV) of the copolyamide molding compound, determined at 20°C in a 0.5% m-cresol solution according to ISO standard 307, is greater than 1.45.

2. The copolyamide molding compound according to Claim 1, **characterized in that** transparent standard samples produced from this copolyamide molding compound, which correspond to the transparent molded parts and extrudates in their composition and can be sterilized by hot steam, have an elongation at tear value which is greater than the elongation at yield after withstanding at least 140 hot steam sterilization cycles, the elongation at tear value being performed according to ISO 527 and each hot steam sterilization cycle being performed for 7 minutes at 134°C.

3. The copolyamide molding compound according to Claim 2, **characterized in that** the standard samples produced from this copolyamide molding compound have an elongation at tear value which is greater than the elongation at yield after withstanding at least 250, preferably at least 300, and especially preferably at least 350 hot steam sterilization cycles.

4. The copolyamide molding compound according to one of the preceding claims, **characterized in that** it has a relative viscosity of at least 1.50, preferably at least 1.525.

5. A use of a co-polyamide molding compound for producing transparent molded parts and extrudates which can be sterilized by hot steam, **characterized in that** the co-polyamide molding compound is formed from:
a) 38 mol-% bis-(4-amino-3-methyl-cyclohexyl) methane (MACM);
b) 38 mol-% isophthalic acid (IPS), which is replaced 50% by terephthalic acid (TPS); and
c) 24 mol-% laurin lactam (LC 12),
the relative viscosity (RV) of the copolyamide molding compound, determined at 20°C in a 0.5% m-cresol solution according to ISO standard 307, is greater than 1.45.

6. The use according to Claim 5, **characterized in that** transparent standard samples produced from this copolyamide molding compound, which correspond to the transparent molded parts and extrudates in their composition and can be sterilized by hot steam, have an elongation at tear value which is greater than the elongation at yield after withstanding at least 140 hot steam sterilization cycles, the elongation at tear value being performed according to ISO 527 and each hot steam sterilization cycle being performed for 7 minutes at 134°C.

7. The use according to Claim 6, **characterized in that** the standard samples produced from this copolyamide molding compound have an elongation at tear value which is greater than the elongation at yield after withstanding at least 250, preferably at least 300, and especially preferably at least 350 hot steam sterilization cycles.

8. The use according to one of Claims 5 to 7, **characterized in that** the relative viscosity (RV) of the co-polyamide molding compound is adjusted to a value which is greater than 1.5, preferably greater than 1.525.

9. The use according to one of Claims 5 to 8, **characterized in that** the transparent molded parts and extrudates, which can be sterilized by hot steam, produced from this copolyamide molding compound are medical articles.

10. The use according to one of Claims 5 to 8, **characterized in that** the transparent molded parts and extrudates, which can be sterilized by hot steam, produced from this copolyamide molding compound are household articles.

11. The use according to one of Claims 5 to 8, **characterized in that** the transparent molded parts and extrudates, which can be sterilized by hot steam, produced from this copolyamide molding compound are device components which come into contact with hot steam.

12. The use according to one of Claims 5 to 8, **characterized in that** additives are admixed to the co-polyamide molding compound for the production of the transparent molded parts and extrudates, which can be sterilized by hot steam, in a quantity which does not permit the transparency to sink below the required value, the additives being independently selected from a group which comprises stabilizers, optical brighteners, colorants, lubricants, and preferably nanoscale fillers and reinforcing agents.

## Revendications

1. Matière moulable de copolyamide destinée à fabriquer des pièces moulées et produits extrudés transparents et stérilisables à la vapeur surchauffée, **caractérisée en ce qu'**elle se compose de :
a) 38 % en mol de bis-(4-amino-3-méthyl-cyclohexyl)méthane (MACM) ;
b) 38 % en mol d'acide isophtalique (IPS), qui est remplacé par 50 % de l'acide téréphtalique (TPS) ; et
c) 24 % en mol de lactame de laurine (LC 12),
dans laquelle la viscosité relative (VR) de la matière moulable de copolyamide, déterminée à 20 °C dans une solution de m-crésol à 0,5 % conformément à la norme ISO 307, est supérieure à 1,45.

2. Matière moulable de copolyamide selon la revendication 1, **caractérisée en ce que** les éprouvettes normalisées transparentes et stérilisables à la vapeur surchauffée, fabriquées à partir de cette matière moulable de copolyamide et correspondant dans leur composition à ces pièces moulées et produits extrudés, présentent une valeur d'élongation à la rupture qui est supérieure à l'élongation à la limite apparente d'élasticité après avoir enduré au moins 140 cycles de stérilisation à la vapeur surchauffée, la valeur d'élongation à la rupture étant obtenue selon ISO 527 et chaque cycle de stérilisation à la vapeur surchauffée étant conduit pendant 7 minutes à 134 °C.

3. Matière moulable de copolyamide selon la revendication 2, **caractérisée en ce que** les éprouvettes normalisées fabriquées à partir de cette matière moulable de copolyamide présentent une valeur d'élongation à la rupture qui est supérieure à l'élongation à la limite apparente d'élasticité après avoir enduré au moins 250, de préférence au moins 300, et de façon particulièrement préférée au moins 350, cycles de stérilisation à la vapeur surchauffée.

4. Matière moulable de copolyamide selon l'une des revendications précédentes, **caractérisée en ce qu'**elle présente une viscosité relative au moins égale à 1,50, de préférence au moins égale à 1,525.

5. Utilisation d'une matière moulable de copolyamide pour fabriquer des pièces moulées et produits extrudés transparents et stérilisables à la vapeur surchauffée, **caractérisée en ce que** la matière moulable de copolyamide est formée de
a) 38 % en mol de bis-(4-amino-3-méthyl-cyclohexyl)méthane (MACM) ;
b) 38 % en mol d'acide isophtalique (IPS), qui est remplacé par 50 % de l'acide téréphtalique (TPS) ; et
c) 24 % en mole de lactame de laurine (LC 12),
dans laquelle la viscosité relative (VR) de la matière moulable de copolyamide, déterminée à 20 °C dans une solution de m-crésol à 0,5 % conformément à la norme ISO 307, est réglée à une valeur qui est supérieure à 1,45.

6. Utilisation selon la revendication 5, **caractérisée en ce que** les éprouvettes normalisées stérilisables à la vapeur surchauffée et transparentes, fabriquées à partir de cette matière moulable de copolyamide et correspondant dans leur composition aux pièces moulées et produits extrudés transparents, présentent une valeur d'élongation à la rupture qui est supérieure à l'élongation à la limite apparente d'élasticité après avoir enduré au moins 140 cycles de stérilisation à la vapeur surchauffée, la valeur d'élongation à la rupture étant obtenue selon ISO 527 et chaque cycle de stérilisation à la vapeur surchauffée étant conduit pendant 7 minutes à 134 °C.

7. Utilisation selon la revendication 6, **caractérisée en ce que** les éprouvettes normalisées fabriquées à partir de cette matière moulable de copolyamide présentent une valeur d'élongation à la rupture qui est supérieure à l'élongation à la limite apparente d'élasticité après avoir enduré au moins 250, de préférence au moins 300, et de façon particulièrement préférée au moins 350, cycles de stérilisation à la vapeur surchauffée.

8. Utilisation selon l'une des revendications 5 à 7, **caractérisée en ce que** la viscosité relative (VR) de la matière moulable de copolyamide est réglée à une valeur qui est supérieure à 1,5, de préférence supérieure à 1,525.

9. Utilisation selon l'une des revendications 5 à 8, **caractérisée en ce que** les pièces moulées et produits extrudés transparents et stérilisables à la vapeur surchauffée, fabriqués à partir de cette matière moulable de copolyamide, sont des articles médicaux.

10. Utilisation selon l'une des revendications 5 à 8, **caractérisée en ce que** les pièces moulées et produits extrudés transparents et stérilisables à la vapeur surchauffée, fabriqués à partir de cette matière moulable de copolyamide, sont des articles ménagers.

11. Utilisation selon l'une des revendications 5 à 8, **caractérisée en ce que** les pièces moulées et produits extrudés transparents et stérilisables à la vapeur surchauffée, fabriqués à partir de cette matière moulable de copolyamide, sont des composants d'appareil qui viennent en contact avec de la vapeur surchauffée.

12. Utilisation selon l'une des revendications 5 à 8, **caractérisée en ce que** pour la fabrication de ces pièces moulées et produits extrudés transparents et stérilisables à la vapeur surchauffée, on mélange à la matière moulable de copolyamide, des additifs dans une quantité qui ne laisse pas descendre la transparence sous une valeur prescrite, les additifs étant indépendamment sélectionnés dans un groupe qui comprend des agents stabilisants, des azurants optiques, des colorants, des lubrifiants et des matières de charge et de renforcement, de préférence de l'échelle du nanomètre.
